Europäisches Patentamt

European Patent Office

Office européen des brevets

(19)

(11) Numéro de publication: **0 242 810**
**B1**

## FASCICULE DE BREVET EUROPEEN

(45) Date de publication du fascicule du brevet: **14.03.90**

(21) Numéro de dépôt: **87105684.2**

(22) Date de dépôt: **16.04.87**

(51) Int. Cl.⁵: **G 01 G 13/29, G 01 G 3/147, G 01 G 23/16, G 01 G 23/37**

(54) Dispositif de dosage pondéral rapide.

(30) Priorité: **18.04.86 FR 8605660**

(43) Date de publication de la demande:
**28.10.87 Bulletin 87/44**

(45) Mention de la délivrance du brevet:
**14.03.90 Bulletin 90/11**

(84) Etats contractants désignés:
**CH DE ES GB IT LI NL SE**

(56) Documents cités:
**EP-A-0 124 356**
**DE-A-2 152 488**
**DE-A-3 202 497**
**DE-A-3 414 934**
**US-A-4 530 065**

(73) Titulaire: **MPI, METROLOGIE PESAGE INTERNATIONAL**
**2/4 Rue Isaac Newton**
**F-93150 Le Blanc-Mesnil (FR)**

(72) Inventeur: **Ange, Marie Jocelyne**
**72, Rue de Dunkerque**
**F-75009 Paris (FR)**
Inventeur: **Bouyssou, Alain**
**19, Avenue Thiers**
**F-77330 Ozoir-la-Ferrière (FR)**
Inventeur: **Marchadier, Jean**
**10, Avenue Reizet**
**F-96390 Enghien-les-Bains (FR)**

(74) Mandataire: **Casalonga, Axel et al**
**BUREAU D.A. CASALONGA - JOSSE**
**Morassistrasse 8**
**D-8000 München 5 (DE)**

Courier Press, Leamington Spa, England.

EP 0 242 810 B1

## Description

L'invention concerne les dispositifs de dosage pondéral qui sont de plus plus utilisés dans l'industrie pour le remplissage de fûts, de sacs, et de divers conditionnements.

La rentabilité de tels dispositifs de dosage est liée en premier lieu à la précision du dosage et à la rapidité de celui-ci, exigences qui sont la plupart du temps contradictoires, mais également en second lieu aux possibilités d'automatisation du dosage lui-méme, des réglages, et d'opérations annexes de gestion impliquant acquisition de données par ordinateur.

On connaît tout d'abord les dispositifs de dosage pondéral mécanique utilisés principalement en ensachage. Lorsque le poids désiré est atteint, un dispositif à échappement fait basculer un contrepoids, ce qui obtenure l'orifice d'arrivée du produit de remplissage. Ces dispositifs sont relativement rapides et faibles, mais dotés de peu de précision, et ils présentent une dérive de réglage dans le temps qui nécessite des interventions fréquentes et non automatiques. En outre, ils n'ffrent aucune sortie d'acquisition de données.

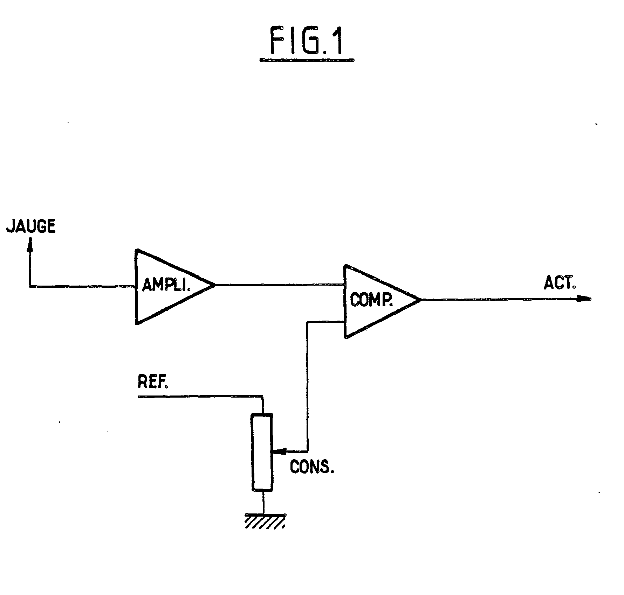

On connaît par ailleurs des dispositifs de dosage dynamométrique électroniques analogiques utilisant en général des jauges de contrainte et correspondant au schéma général de la figure 1. Après amplification, le signal de mesure est comparé à une consigne qui est élaborée à partir d'une tension de référence, et le réglage est obtenu à l'aide d'un afficheur potentiométrique de précision. Lorsque le poids désiré est atteint, le signal amplifié devient égal à la consigne, le comparateur change d'état et actionne une sortie pour stopper l'arrivée de produit de remplissage. Ces dispositifs présentent l'avantage d'un faible coût, d'une assez bonne fiabilité et d'une assez grande rapidité. Par contre ils ne présentent pas de possibilité de calage ou de tarage simple, ce qui affecte leur précision, et ils ne présentent pas de possibilités d'automatisme ni de sorties d'acquisition de données numériques.

On connaît également des dispositifs de dosage pondéral à logique programmée qui utilisent comme les précédents des jauges de contrainte avec amplification, mais le signal de mesure est converti par un convertisseur analogique/numérique pour permettre le traitement ultérieur sous forme numérique par un microprocesseur.

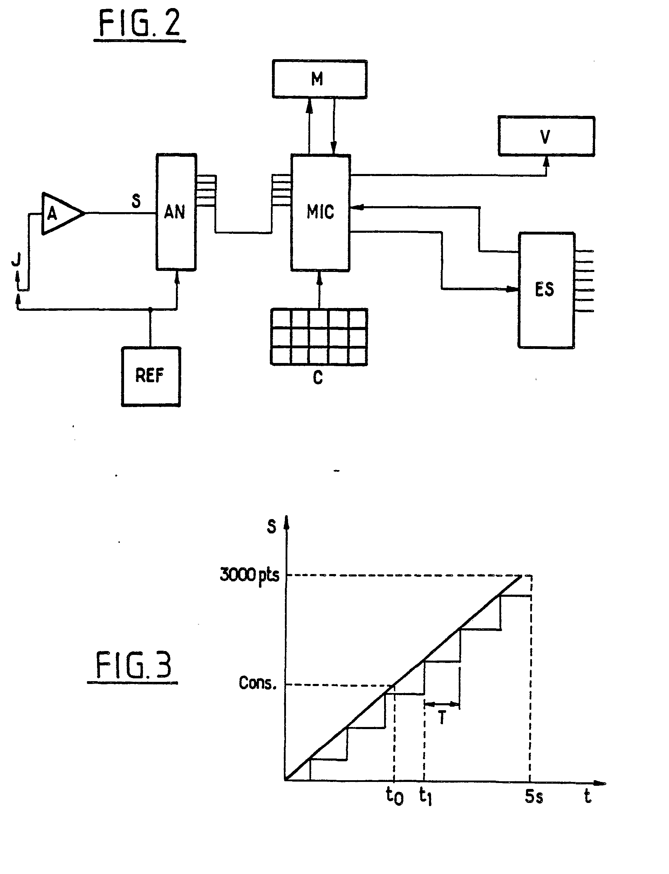

Les dispositifs de ce type répondent au schéma général représenté sur la figure 2. La valeur de consigne est introduite au moyen du clavier Ce et elle se trouve enregistrée dans la mémoire M par le microprocesseur MIC. Ce microprocesseur MIC fait l'acquisition de la mesure, soit par scrutation du convertisseur analogique/numérique AN, soit sur réception d'un signal délivré par ce convertisseur pour indiquer que la mesure est prête.

L'utilisation de jauges de contraintes J dans le pesage conduit au traitement de signaux de très faible amplitude, amplifiés au préalable par l'amplificateur A, mais permet une précision de mesure très élevée. Ce résultat impose pour le convertisseur AN l'utilisation de la technologie à intégration à double rampe ratiométrique. Les convertisseurs de ce type sont d'un coût réduit, sont faciles à implanter dans un environnement à microprocesseur, et sont de grande précision. Ils ont cependant l'inconvénient d'être très lents, puisque le temps de conversion est dans le meilleur des cas de 40 ms (soit 25 mesures par seconde).

La présence d'un microprocesseur rend possible par programme tout traitement informatique de la mesure. Un cycle d'automatisme devient réalisable par logiciel, et toutes les entrées-sorties souhaitées sont possibles, par exemple les sorties sur un dispositif de visualisation V ou un dispositif d'entrées-sorties ES, pouvant inclure par exemple une imprimante.

Une des possibilités particulièrement intéressante d'un tel dispositif est de pouvoir caler automatiquement le zéro de l'appareil, ce qui est largement utilisé en pesage pour tarer ce dispositif doseur.

Il faut cependant noter que le signal analogique fourni par A au convertisseur AN est découplé de la mesure traitée par le microprocesseur MIC, de sorte que, lorsqu'une mise à zéro est effectuée, le signal analogique reste toujours le même. De ce fait la comparaison entre la mesure et la consigne ne peut être réalisée que sous forme numérique par le microprocesseur et à chaque rafraîchissement du poids, c'est-à-dire d'une manière discontinue. Il en résulte un inconvénient extrêmement important qui va être illustré par un exemple:

On suppose par exemple que la durée de conversion du convertisseur AN est de 40 ms, c'est-à-dire une des meilleures valeurs possibles comme indiqué plus haut, que la précision recherchée est de 3000 points, et la durée de remplissage de 5000 ms.

La courbe continue représentée sur la figure 3 montre l'évolution en fonction du temps du signal S à l'entrée du convertisseur AN. La courbe an escalier montre ce que voit le microprocesseur MIC par ses acquisitions successives sur l'étendue de mesure de 3000 points. La valeur T représente la durée de conversion du convertisseur, c'est-à-dire 40 ms dans l'exemple choisi. A une valeur de consigne Cons illustrée sur la figure 3 correspondrait théoriquement, d'après la courbe continue, un temps de coïncidence $t_0$. Mais en fait le microprocesseur ne peut détecter la coïcidence qu'au temps $t_l$. Le début de l'opération de dosage avec la première conversion du convertisseur à partir de cet instant n'étant pas synchrone, et l'évolution du débit avec le temps n'étant pas d'une précision rigoureuse, le retard de détection $t_1 - t_0$ varie de manière aléatoire d'une mesure à l'autre et reste compris entre 0 et T.

Cette erreur maximale, rapportée aux 3000 points, est égale à la durée de conversion 40 ms rapportée à la durée de remplissage 5000 ms, soit 0,8% de 3000 points, ou encore 24 divisions.

Or la législation impose que l'erreur ne dépasse pas en plus ou en moins 1,5 division.

On voit que les dispositifs de ce type, malgré les grands avantages indiqués plus haut, ne permettent pas de concilier la précision et la vitesse de remplissage à des valeurs convenables.

De US—A—4530065 un dispositif de dosage pondéral est connu avec au comparateur analogique en question connecté avec un dispositif de sortie par des éléments intermédiaires.

L'objet de l'invention est de surmonter cet inconvénient majeur et de réaliser un dispositif de dosage à microprocesseur dans lequel le temps de conversion analogique/numérique ne soit plus un obstacle à la précision.

L'invention consiste à réaliser la comparaison entre la mesure et la consigne, non plus sous forme numérique par la microprocesseur, mais sous forme analogique par le comparateur analogique auquel une valeur analogique de consigne est fournie par au moins un convertisseur numérique analogique recevant en entrée des valeurs numériques élaborées par le microprocesseur. Ce comparateur analogique peut alors directement commander le dispositif d'entrées/sorties.

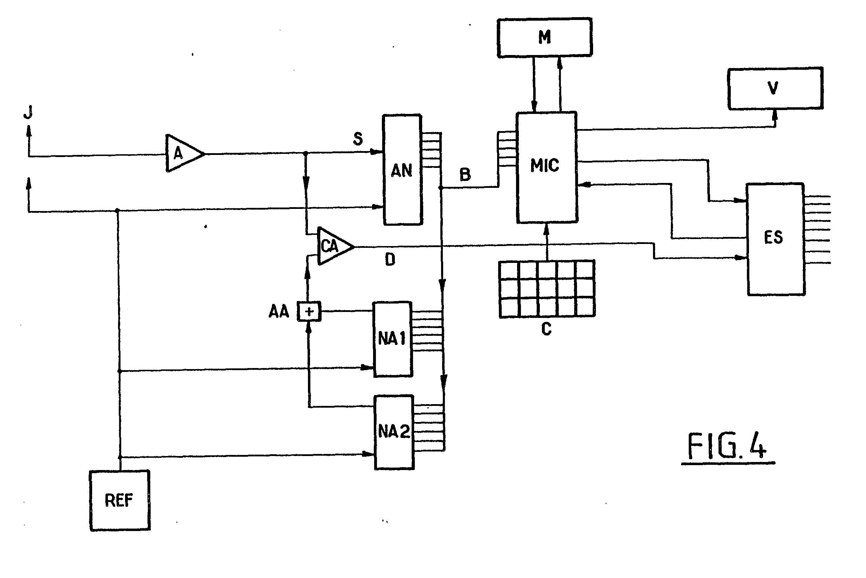

D'autres particularités de l'invention apparaîtront dans la description qui va suivre d'un mode de réalisation pris comme exemple et représenté sur la figure 4 du dessin annexé.

Dans ce dispositif on retrouve comme précédemment les jauges de contraintes J montées en pont et l'amplificateur A élaborant le signal analogique S qui est fourni en entrée au convertisseur analogique numérique AN. Comme précédemment il s'agit d'un dispositif ratiométrique, c'est-à-dire qu'un signal de référence REF est fourni simultanément à la diagonale d'entrée du pont J et au convertisseur analogique numérique AN. Les sorties numériques de ce convertisseur sont transmises par un bus B au microprocesseur MIC qui est connecté comme dans l'exemple précédente à sa mémoire M, au clavier C et aux périphériques V et ES.

La différence avec l'état de la technique des figures 2 et 3 est essentiellement que la comparaison entre la mesure et la consigne n'est pas effectuée sous forme numérique par le microprocesseur, mais au contraire sous forme analogique par un comparateur analogique CA qui reçoit en entrée directement le signal analogique S et une valeur de consigne élaborée également sous forme analogique par au moins un convertisseur numérique/analogique NA1, la valeur de consigne étant en fait fournie par le microprocesseur MIC sous forme numérique par le bus B à ce convertisseur NA1.

De préférence on utilise deux convertisseurs numériques analogiques NA1 et NA2 dont les sorties analogiques sont couplées par un additionneur analogique AA qui fournit la consigne analogique au comparateur CA. Dans ce cas NA1 est utilisé pour fournir la consigne proprement dite, tandis que NA2 est utilisé pour les corrections imposées par les actions de tarage, de demande de zéro et de zéro suiveur.

On comprend dès lors que le signal analogique de consigne fourni par AA est pratiquement constant ou ne varie que d'une manière infime en fonction des corrections apportées d'une mesure à une autre, de sorte que lorsque la valeur du signal analogique S franchit la valeur de la consigne, le comparateur CA bascule et envoie le signal de détection D directement et sans retard au dispositif d'entrées/sorties ES, ce qui évite complètement l'imprécision indiquée plus haut due au retard des conversions analogiques/ numériques, aussi bien que numériques/analogiques. Par contre le microprocesseur continue à effectuer toutes les autres tâches, plus l'élaboration des valeurs numériques de commande de NA1 et NA2.

Comme dans l'exemple précédent, la consigne est introduite par le clavier C dans la mémoire M et la valeur de décalage est également mémorisée. Chaque action de tarage, de demande de zéro ou de modification de zéro suiveur est prise en compte et modifie cette valeur de décalage. Le microprocesseur présente alors au convertisseur NA1 une valeur numérique correspondant à la consigne et au convertisseur NA2 une valeur numérique calculée selon les erreurs déduites des résultats de mesure précédents. Naturellement les deux convertisseurs numériques analogiques NA1 et NA2 reçoivent également la valeur de référence de REF.

Le dispositif selon l'invention est ainsi tout aussi rapide que le dispositif purement analogique de la figure 1, et en même temps tout aussi puissant dans des possibilités d'automatisation et de traitement numérique que le dispositif des figures 2 et 3, tout en étant à peine plus complex et à peine plus onéreux que ce dernier, mais beaucoup plus précis puisque sa précision ne dépende plus de temps de conversion ni de la durée du pesage.

## Revendications

1. Dispositif de dosage pondéral incluant des jauges de mesure (J), un amplificateur (A), un convertisseur analogique/numérique (AN) et un microprocesseur (MIC) avec sa mémoire (M) et ses périphériques (C, V, ES), un comparateur analogique (CA) recevant d'une part le même signal analogique que celui fourni audit convertisseur analogique numérique (AN), et d'autre part une valeur de consigne analogique, ce dispositif étant destiné en particulier à élaborer un signal de détection (D) pour commander l'actionneur d'un dispositif de remplissage, caractérisé par le fait que la valeur est élaborée par au moins un convertisseur numérique/analogique (NA1, NA2) dont les valeurs d'entrées numériques proviennent du microprocesseur (MIC), ce comparateur (CA) fournissant un signal de détection (D) qui est transmis directement au dispositif de sortie sas passer par le microprocesseur par aucun autre intermédiaire.

2. Dispositif selon la revendication 1, caractérisé par le fait qu'il comporte deux convertisseurs numériques/analogiques (NA1, NA2) dont les sorties analogiques sont couplées par un additionneur analogique (AA) qui fournit en sortie le signal de référence au comparateur analogique (CA), ces convertisseurs étant affectés l'un à la conversion de la valeur de consigne proprement dite, et l'autre à la valeur de décalage élaborée et éventuellement réactualisée par le microprocesseur.

3. Dispositif selon une des revendications précédentes, caractérisé par le fait que tous les convertisseurs analogique/numérique (AN) et numériques/analogiques (NA1, NA2) reçoivent la même tension de référence (REF), qui est fournie également aux jauges de mesure (J), de manière que le dosage soit insensible aux variations éventuelles de cette valeur de référence.

**Patentansprüche**

1. Vorrichtung zur Gewichtsdosierung, die Meßwertaufnehmer (J), einen Verstärker (A), einen Analog/Digital-Wandler (AN) und einen Mikroprozessor (MIC) mit einem Speicher (M) und Peripheriegeräten (C, V, ES) sowie einen analogkomparator (CA) aufweist, der zum einen dasselbe Analogsignal wie das dem Analog/Digital-Wandler (AN) zugeführte und zum anderen einen analogen Bezugswert empfängt, wobei die Vorrichtung insbesondere dazu vorgesehen ist, ein Stellsignal (D) zu erzeugen, um die Betätigungseinrichtung einer Füllvorrichtung anzusteuern, dadurch gekennzeichnet, daß der Bezugswert mit Hilfe eines Digital/Analog-Wandlers (NA1, NA2) gewonnen ist, dessen digitale Eingangswerte von dem Mikroprozessor (MIC) kommen, wobei der Komparator (CA) das Stellsignal (D) liefert, das unmittelbar zu der Ausgangseinrichtung gelangt, ohne durch den Mikroprozessor oder über irgend ein anderes Zwischenglied zu laufen.

2. Vorrichtung nach Anspruch 1, dadurch gekennzeichnet, daß sie zwei Digital/Analog-Wandler (NA1, NA2) aufweist, deren Analogausgänge über einen Analogaddierer (AA) miteinander gekoppelt sind, der am Ausgang das Vergleichssignal an den Analogkomparator (CA) liefert, wobei die Wandler dzu eingerichtet sind, daß eine den eigentlichen Bezugswert und der andere einen Offsetwert umfandelt, der von dem Mikroprozessor ermittelt und unter Umständen wieder aktuallisiert ist.

3. Vorrichtung nach einem der vorstehenden Ansprüche, dadurch gekennzeichnet, daß sowohl der Analog/Digital-Wandler (AN) als auch die Digital/Analog-Wandler (NA1, NA2) dieselbe Referenzspannung (REF) erhalten, die gleichfalls an die Meßwertaufnehmer (J) angelegt ist, in der Art, daß das Dosieren gegenüber eventuellen Veränderungen dieses Referenzwertes unempfindlich ist.

**Claims**

1. Device for proportioning by weight including measurement gauges (J), an amplifier (A), an analog/digital converter (AN) and a microprocessor (MIC) with its memory (M) and its peripherals (C, V, ES), and an analog comparator (CA) receiving on the one hand the same analog signal as that supplied to the analog/digital converter (AN), and on the other hand an analog instruction value, this device being adapted in particular to work out a detection signal (D) to command the actuator of a filling device, characterised by the fact that the value is worked out by at least one digital/analog converter (NA1, NA2) the digital input values of which come from the microprocessor (MIC), this comparator (CA) supplying a detection signal (D) which is sent directly to the output device without passing through the microprocessor or through any other intermediary.

2. Device as claimed in claim 1, characterised by the fact that it comprises two digital/analog converters (NA1, NA2) the analog outputs from which are coupled by an analog adder (AA) which supplies as output the reference signal to the analog comparator (CA), these converters being allocated one to the conversion of the instruction value proper, and the other to the offset value worked out and optionally updated by the microprocessor.

3. Device as claimed in one of the above claims, characterised by the fact that all of the analog/digital converters (AN) and digital/analog converters (NA1, NA2) receive the same reference voltage (REF), which is also supplied to the measurement gauges (J), so that the proportioning is insensitive to any variations in this reference value.

# FIG.1

JAUGE

AMPLI.

COMP.

ACT.

REF.

CONS.

# FIG. 2

# FIG. 3

FIG. 4